# EUROPÄISCHE PATENTSCHRIFT

(11) **EP 3 423 783 B1**
(45) Veröffentlichungstag und Bekanntmachung des Hinweises auf die Patenterteilung: **19.02.2020**
(21) Anmeldenummer: 17703644.9
(22) Anmeldetag: 19.01.2017
(51) Int. Cl.: G01B 9/02

(54) **VERFAHREN FÜR DIE SIGNALVERARBEITUNG BEI DER OPTISCHEN KOHÄRENZTOMOGRAFIE MIT EINER DURCHSTIMMBAREN LICHTQUELLE**
METHOD FOR SIGNAL PROCESSING IN OPTICAL COHERENCE TOMOGRAPHY BY MEANS OF A TUNABLE LIGHT SOURCE
PROCÉDÉ DE TRAITEMENT DE SIGNAL EN TOMOGRAPHIE PAR COHÉRENCE OPTIQUE AU MOYEN D'UNE SOURCE DE LUMIÈRE AJUSTABLE

(30) Priorität: 01.03.2016 DE 102016103605
(43) Veröffentlichungstag der Anmeldung: 09.01.2019
(73) Patentinhaber: Heidelberg Engineering GmbH, 69121 Heidelberg (DE)
(72) Erfinder: MARTENSEN, Björn, 23560 Lübeck (DE); FRITZ, Andreas, 19217 Utecht (DE)
(74) Vertreter: Angerhausen, Christoph
(86) Internationale Anmeldenummer: PCT/DE2017/100026
(87) Internationale Veröffentlichungsnummer: WO 2017/148463

(56) Entgegenhaltungen:
- US-A1- 2014 028 997
- Thomas Klein ET AL: "Megahertz OCT for ultrawide-field retinal imaging with a 1050nm Fourier domain mode- locked laser References and links", Science Am. J. Ophthalmol. Opt. Lett. Prog. Retin. Eye Res. Clin. Experiment. Ophthalmol. Opt. Express, 2. Februar 2011 (2011-02-02), Seiten 1178-1181, XP055356385, Gefunden im Internet: URL:https://www.osapublishing.org/DirectPD FAccess/32F53318-C35A-996F-2D3DDFC87FCBFA7 9_209887/oe-19-4-3044.pdf?da=1&id=209887&s eq=0&mobile=no [gefunden am 2017-03-20]
- BIEDERMANN B R ET AL: "Real time en face Fourier-domain optical coherence tomography with direct hardware frequency demodulation", OPTICS LETTERS, OPTICAL SOCIETY OF AMERICA, Bd. 33, Nr. 21, 1. November 2008 (2008-11-01), Seiten 2556-2558, XP001519571, ISSN: 0146-9592, DOI: 10.1364/OL.33.002556
- WOOJHON CHOI ET AL: "Phase-sensitive swept-source optical coherence tomography imaging of the human retina with a vertical cavity surface-emitting laser light source", OPTICS LETTERS, OPTICAL SOCIETY OF AMERICA, Bd. 38, Nr. 3, 1. Februar 2013 (2013-02-01), Seiten 338-340, XP001579874, ISSN: 0146-9592, DOI: HTTP://DX.DOI.ORG/10.1364/OL.38.000338

## Beschreibung

Die Erfindung geht aus von einem Verfahren für die Signalverarbeitung bei der optischen Kohärenztomografie mit einer durchstimmbaren Lichtquelle (*swept source*) gemäß dem Oberbegriff des unabhängigen Anspruchs 1. Ein derartiges Verfahren ist beispielsweise aus der US 2014/028997 A1 bekannt.

Die Fensterfunktion führt dazu, dass Teile des Signals nicht genutzt werden, da diese "weggefenstert", d. h. herausgefiltert werden. Zur Erhöhung des nutzbaren Spektralbereichs und zur Verstärkung der Signalintensität ist es wünschenswert, den durch Anwendung der Fensterfunktion verlustigen Anteil zu minimieren.

Um dies zu erreichen wird vorgeschlagen, dass der Sweep-Geschwindigkeitsverlauf mit Hilfe eines Mach-Zehnder-Interferometers (MZI) bestimmt wird, indem zwei Fiber-Bragg-Gitter bekannter und sich unterscheidender Reflexionswellenlänge im Strahlpropagationsweg zwischen Interferometer und Detektor angeordnet werden und eine Modulationsfrequenz der durchstimmbaren Lichtquelle, welche proportional zur Sweep-Geschwindigkeit ist, erfasst und über die Zeit aufgetragen wird, so dass der Modulationsfrequenzverlauf zwei Einbrüche bei jeweils einer bestimmten Wellenlänge bzw. Wellenzahl aufweist, und wobei aus dem gewonnenen MZI-Signalverlauf per Kurzzeit-Fourier-Transformation (*Short Time Fourier Transform, STFT*) der Sweep-Geschwindigkeitsverlauf bestimmt wird.

Die angewandte Fensterfunktion kann ein Von-Hann-Fenster sein. Grundsätzlich wäre eine Lichtquelle, deren Spektralform dem Verlauf der Fensterfunktion entspricht, optimal. Um gleichzeitig eine bestmögliche Seitenwandunterdrückung zu erhalten, kann eine gaußförmige Lichtverteilung im k-Raum als ein geeigneter Kompromiss dienen. So kann die durchstimmbare Lichtquelle eine gaußförmige Lichtintensitätsverteilung im k-Raum aufweisen. Insbesondere kann die Spektralform der Lichtquelle im k-Raum der Form des Verlaufs der Fensterfunktion entsprechen oder dieser zumindest angenähert sein.

Der zeitliche Verlauf der Signalintensität kann beispielsweise mit einer Photodiode aufgenommen werden.

Dabei kann die Einhüllende des Modulationsfrequenzverlaufs ermittelt und deren Abweichung von einer Referenzform der Fensterfunktion, insbesondere von der Gaußform, erfasst werden. Weiterhin kann für eine Anpassung der Einhüllenden des Modulationsfrequenzverlaufs an die Referenzform der Fensterfunktion der Strom eines Halbleiterlaserverstärkers (SOA) der Lichtquelle moduliert oder der Sweep-Geschwindigkeitsverlauf variiert werden.

Die zur Bestimmung der Einhüllenden des Modulationsfrequenzverlaufs erfassten Daten können über eine Feedbackloop zur Feinabstimmung der Swept-Source, insbesondere einer VCSEL-Lichtquelle verwendet werden.

Weitere Einzelheiten der Erfindung werden anhand der nachstehenden Figuren erläutert. Dabei zeigt:
- Figur 1: schematisch einen Aufbau für die Leistungsmessung und Bestimmung des Sweep-Geschwindigkeitsverlaufs einer durchstimmbaren Lichtquelle;
- Figur 2: eine erste Anordnung zur Erzeugung von Wellenlängenmarken für die Erfassung der Spektralform der durchstimmbaren Lichtquelle; und
- Figur 3: eine weitere Anordnung für die Erzeugung von Wellenlängenmarken für die Bestimmung der Spektralform einer durchstimmbaren Lichtquelle.

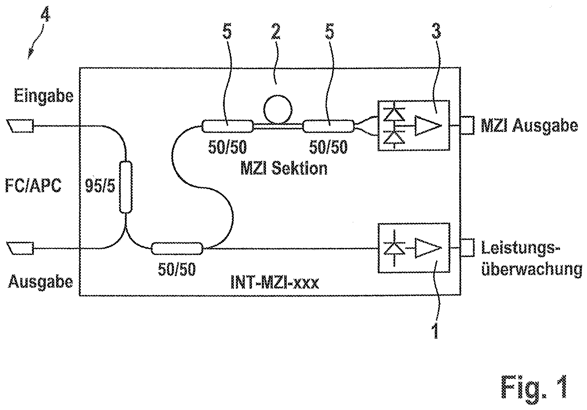

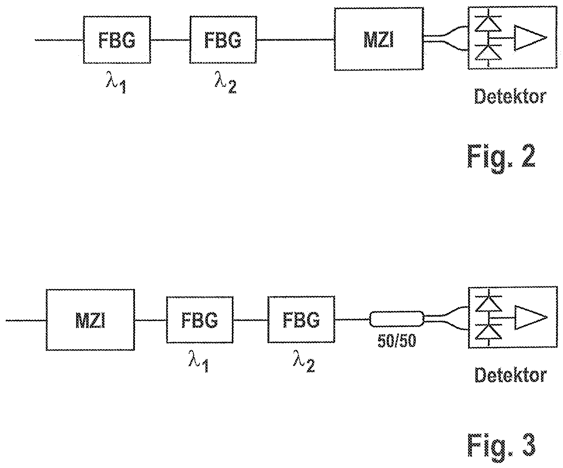

Die Spektralform der durchstimmbaren Lichtquelle im k-Raum ist nicht unmittelbar messbar. Die in den Figuren 1 - 3 schematisch wiedergegebenen Messanordnungen erlauben es jedoch, die Spektralform im k-Raum mittelbar durch Auswertung erfassbarer Parameter zu bestimmen.

In einem ersten Schritt wird durch Aussetzung des Signals einer Fotodiode 1 oder anderweitigen lichtsensitiven Messzellen die Einhüllende der Lichtintensität der durchstimmbaren Lichtquelle über die Zeit erfasst.

Die Messung des Sweep-Geschwindigkeitsverlaufs erfolgt mit Hilfe eines Mach-Zehnder-Inteferometers (MZI) 3, indem die Modulationsfrequenz, welche proportional zur Sweep-Geschwindigkeit ist, analysiert und über die Zeit aufgetragen wird. Zusätzlich sind zwei Stellen im Sweep markiert, in dem zwei Fiber-Bragg-Gitter 5 bekannter und sich unterscheidender Reflexionswellenlänge zwischen Interferometer 4 und Detektor 3 angeordnet sind. Durch diese werden Signaleinbrüche im MZI-Rohsignal erzeugt, die mit einer entsprechende Wellenlänge bzw. Wellenzahl korrespondieren.

Aus dem MZI-Signal wird mit Hilfe von STFT ein Geschwindigkeitsverlauf generiert. Aus den wie zuvor beschrieben gewonnenen Daten wird auf die Leistungsverteilung im k-Raum geschlossen. Dies erlaubt es, die Abweichung der Spektralform der durchstimmbaren Lichtquelle von der optimalen Gaußform zu ermitteln.

Für die Optimierung der Spektralform der durchstimmbaren Lichtquelle kann nun beispielsweise der Strom eines Halbleiterlaserverstärkers (SOA) der Lichtquelle moduliert oder der Sweep-Geschwindigkeitsverlauf variiert werden. Beide Wege sind prinzipiell gleichsam geeignet, allerdings wird eine möglichst konstante Geschwindigkeit des Sweeps als vorteilhaft empfunden, um Detektorbandbreite sparen zu können, was wiederum der Messempfindlichkeit zugute kommt.

Die mit dem oben beschriebenen Verfahren gewonnenen Daten können per Feedbackloop automatischen Feinabstimmungen der VCSEL-Lichtquelle, oder jeder anderen geeigneten Swept-Source, verwendet werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren für die Signalverarbeitung bei der optischen Kohärenztomografie mit einer durchstimmbaren Lichtquelle, das die Schritte aufweist:
- Durchstimmen der Lichtquelle und Erfassen einer Signalintensität der Lichtquelle in linearer Abhängigkeit der jeweiligen Wellenzahl k der durchstimmbaren Lichtquelle und Erzeugen einer Signalintensitätsverteilung in Abhängigkeit von k;
- Anwenden einer Fensterfunktion auf die erfasste Signalintensitätsversteilung und Erzeugen einer gewichteten Signalintensitätsversteilung; und
- Anwenden einer Schnellen Fourier-Transformation, FFT, auf die gewichtete Signalintensitätsversteilung;
wobei bei dem Durchstimmen der Lichtquelle das durchgestimmte Frequenzspektrum auf einen Durchlassbereich der Fensterfunktion beschränkt wird,
wobei für eine Bestimmung der Spektralform der Lichtquelle im k-Raum der zeitliche Verlauf der Signalintensität und der Sweep-Geschwindigkeitsverlauf gemessen werden,
**dadurch gekennzeichnet, dass** der Sweep-Geschwindigkeitsverlauf mit Hilfe eines Mach-Zehnder-Interferometers, MZI, bestimmt wird, indem zwei Fiber-Bragg-Gitter bekannter Reflexionswellenlänge im Strahlpropagationsweg zwischen Interferometer und Detektor angeordnet werden und eine Modulationsfrequenz der durchstimmbaren Lichtquelle, welche proportional zur Sweep-Geschwindigkeit ist, erfasst und über die Zeit aufgetragen wird, so dass der Modulationsfrequenzverlauf zwei Einbrüche bei einer bestimmten Wellenlänge bzw. Wellenzahl aufweist, und wobei aus dem gewonnenen MZI-Signalverlauf per Kurzzeit-Fourier-Transformation der Sweep-Geschwindigkeitsverlauf bestimmt wird.

2. Verfahren nach Anspruch 1, bei dem beim Anwenden der Fensterfunktion ein Von-Hann-Fenster angewendet wird.

3. Verfahren nach Anspruch 1 oder 2 , bei dem als durchstimmbare Lichtquelle eine durchstimmbare Lichtquelle mit einer gaußförmige Lichtintensitätsverteilung im k-Raum verwendet wird.

4. Verfahren nach einem der vorangegangen Ansprüche, bei dem die Spektralform der Lichtquelle im k-Raum der Form des Verlaufs der Fensterfunktion entspricht.

5. Verfahren nach Anspruch 1, bei dem der zeitliche Verlauf der Signalintensität mit einer Photodiode aufgenommen wird.

6. Verfahren nach Anspruch 1, bei dem die Einhüllende des Modulationsfrequenzverlaufs ermittelt und deren Abweichung von einer Referenzform der Fensterfunktion, insbesondere von der Gaußform, erfasst wird.

7. Verfahren nach Anspruch 6, bei dem für eine Anpassung der Einhüllenden des Modulationsfrequenzverlaufs an die Referenzform der Fensterfunktion der Strom eines Halbleiterlaserverstärkers der Lichtquelle moduliert oder der Sweep-Geschwindigkeitsverlauf variiert wird.

8. Verfahren nach einem der Ansprüche 5 bis 7, bei dem die zur Bestimmung der Einhüllenden des Modulationsfrequenzverlaufs erfassten Daten über eine Feedbackloop zur Feinabstimmung einer VCSEL-Lichtquelle verwendet werden.

## Claims

1. A method for signal processing in optical coherence tomography by means of a tunable light source, which comprises the steps:
- tuning the light source and sensing a signal intensity of the light source in linear dependence on the respective wave number k of the tunable light source and producing a signal intensity distribution in dependence on k;
- applying a window function to the sensed signal intensity distribution and producing a weighted signal intensity distribution; and
- applying a fast Fourier transform, FFT, to the weighted signal intensity distribution;
wherein, in the tuning of the light source, the tuned frequency spectrum is limited to a passband of the window function,
wherein, for a determination of the spectrum shape of the light source in the k-space, the temporal curve of the signal intensity and the sweep speed curve are measured,
**characterized in that** the sweep speed curve is determined with the aid of a Mach-Zehnder interferometer, MZI, **in that** two Fiber-Bragg gratings of known reflection wavelength are arranged in the beam propagation path between interferometer and detector, and a modulation frequency of the tunable light source, which is proportional to the sweep speed, is sensed and plotted versus time, so that the modulation frequency curve comprises two dips at a certain wavelength or wave number, and wherein the sweep speed curve is determined from the obtained MZI signal curve by short time Fourier transform.

2. The method according to claim 1, wherein, when applying the window function, a von Hann window is applied.

3. The method according to claim 1 or 2, wherein a tunable light source having a Gaussian light intensity distribution in the k-space is used as tunable light source.

4. The method according to any one of the preceding claims, wherein the spectrum shape of the light source in the k-space corresponds to the shape of the curve of the window function.

5. The method according to claim 1, wherein the temporal curve of the signal intensity is recorded with a photodiode.

6. The method according to claim 1, wherein the envelope of the modulation frequency curve is determined and the deviation thereof from a reference shape of the window function, in particular from the Gaussian shape, is sensed.

7. The method according to claim 6, wherein, for an adaptation of the envelope of the modulation frequency curve to the reference shape of the window function, the current of a semiconductor optical amplifier of the light source is modulated or the sweep speed curve is varied.

8. The method according to any one of the preceding claims 5 to 7, wherein the data sensed for the determination of the envelope of the modulation frequency curve is used via a feedback loop for the fine tuning of a VCSEL light source.

## Revendications

1. Procédé pour le traitement de signaux pour la tomographie optique avec une source de lumière accordable qui comprend les étapes suivantes :
- ajustement de la source de lumière et mesure d'une intensité de signal de la source de lumière en dépendance linéaire du nombre d'onde respectif k de la source de lumière accordable et génération d'une répartition d'intensité de signaux en fonction de k ;
- application de la fonction de fenêtre sur la répartition d'intensité de signaux mesurée et génération d'une répartition d'intensité de signaux pondérée ; et
- application d'une transformation de Fourier rapide FFT à la répartition d'intensité de signaux pondérée ;
moyennant quoi, lors de l'ajustement de la source de lumière, le spectre de fréquence ajusté est limité à une bande passante de la fonction de fenêtre,
moyennant quoi, pour une détermination de la forme spectrale de la source de lumière dans l'espace k, le tracé temporel de l'intensité des signaux et le tracé de la vitesse de balayage sont mesurés,
**caractérisé en ce que** le tracé de vitesse de balayage est déterminé à l'aide d'un interféromètre de Mach-Zender, grâce au fait que deux grilles de Fiber-Bragg d'une longueur d'onde de réflexion connue sont disposées dans le trajet de propagation entre l'interféromètre et un détecteur et une fréquence de modulation de la source de lumière accordable, qui est proportionnelle à la vitesse de balayage, est mesurée et tracée en fonction du temps, de façon à ce que le tracé de la fréquence de modulation présente deux fléchissements à une longueur d'onde ou à un nombre d'onde déterminé et moyennant quoi, à partir du tracé de signal MZI obtenu par transformation de Fourier rapide, le tracé de vitesse de balayage est déterminée.

2. Procédé selon la revendication 1, dans lequel, lors de l'application de la fonction de fenêtre, une fenêtre de Von Hann est appliquée.

3. Procédé selon la revendication 1 ou 2, dans lequel, en tant que source de lumière accordable, une source de lumière accordable avec une répartition d'intensité de lumière en forme de courbe de Gauss dans l'espace k est utilisée.

4. Procédé selon l'une des revendications précédentes, dans lequel la forme spectrale de la source de lumière dans l'espace k correspond à la forme du tracé de la fonction de fenêtre.

5. Procédé selon la revendication 1, dans lequel le tracé temporel de l'intensité des signaux est enregistré avec une photodiode.

6. Procédé selon la revendication 1, dans lequel l'enveloppe du tracé de la fréquence de modulation est déterminée et son écart par rapport à une forme de référence de la fonction de fenêtre, plus particulièrement de la forme de Gauss, est mesuré.

7. Procédé selon la revendication 6, dans lequel, pour un ajustement de l'enveloppe du tracé de la fréquence de modulation à la forme de référence de la fonction de fenêtre, le courant d'un amplificateur de laser à semi-conducteur de la source de lumière est modulé ou le tracé de vitesse de balayage est modifié.

8. Procédé selon l'une des revendications 5 à 7, dans lequel les données relevées pour la détermination de l'enveloppe du tracé de la fréquence de modulation sont utilisées par l'intermédiaire d'une boucle de retour pour la détermination précise d'une source de lumière VCSEL.
